# EUROPEAN PATENT APPLICATION

(11) **EP 1 649 909 A1**
(43) Date of publication of application: **26.04.2006**
(21) Application number: 05022436.9
(22) Date of filing: 14.10.2005
(51) Int. Cl.: A63F 9/18, A63F 13/02

(54) **Interactive game**

(30) Priority: 15.10.2004 US 619368 P
(71) Applicant: Radica Games Ltd., Hamilton, HM11 (BM)
(72) Inventor: Brase, Kevin, Corinth, TX 76210 (US)
(74) Representative: Becker Kurig Straus

(57) **Abstract**

The present invention relates to a device including a display device, a plurality of inputs adjacent the display, and electrical components. The electrical components are operable to display a question to a player on the display device, wherein the question is used to determine an undisclosed object, enable the player to input an answer to the question by activating one of the inputs, and repeat until a resultant object is determined based on the displayed questions and the answers to the displayed questions inputted by the player.

## Description

### CROSS REFERENCE TO RELATED APPLICATION

This application claims the benefit of U.S. Provisional Application Serial No. 60/619,368, filed October 15, 2004, entitled "Interactive Deduction Game", the entire contents of which are hereby incorporated by reference.

### BACKGROUND

Several different types of electronic devices such as hand-held electronic devices include games which are played by one or more players. Other types of games use game boards and other game pieces such as most board games. Playing different games and different types of games provides excitement and enjoyment for players.

Games which utilize questions and answers are well known. Such games typically require a player to produce the correct answer within a set period of time. In the Jeopardy (SM) TV game, a player answers with a "what is" question. In the Wheel of Fortune TV game, a contestant is given a clue in the form of the identification of a category of information, and contestants then guess at the correct answer by supplying letters of the alphabet in an attempt to spell the answer.

U.S. Pat. No. 6,120,032, issued Sep. 19, 2000, discloses a game having a display of alphanumeric combinations, and a device containing at least one category of subjects involving questions and correct answers to the questions in the form of clues provided by the numbers of the alphanumeric combination contained in the display.

U.S. Pat. No. 6,224,057, issued May 1, 2001, describes a game with a game board and playing pieces. The playing pieces are used by the players to mark the movement of the players as the players advance around the game board. During each turn, the player must answer a question and construct a list of words based upon the letters in the correct answer. The player accumulating a predetermined number of points is declared the winner.

Accordingly, there is a need for new and exciting games which provide excitement and enjoyment for players.

### SUMMARY

The present invention relates to a method, including the steps of providing a device with a display, a plurality of inputs, and a processor, displaying a question on the display, wherein the question is used to determine an undisclosed predetermined object unknown to the processor, inputting an answer to the question by activating one of the inputs, repeating until a resultant object is determined by the processor based on the displayed questions and the answers to the displayed questions inputted by the player, and displaying the resultant object on the display.

The present invention also relates to a device including a display device, a plurality of inputs adjacent the display, and electrical components. The electrical components are operable to display a question to a player on the display device, wherein the question is used to determine an undisclosed object, enable the player to input an answer to the question by activating one of the inputs, and repeat until a resultant object is determined based on the displayed questions and the answers to the displayed questions inputted by the player.

The present invention also relates to a computer program product, including a computer usable medium having computer readable program code embodied therein, the computer program product comprising, computer readable code configured to cause a computer to display a series of questions regarding an object predetermined by a user, computer readable code configured to store data entered by the user about the object in response to the series of questions, and computer readable code configured to display text attempting to identify the object based on the displayed series of questions and stored input entered by the user.

Additional features and advantages of the present invention are described in, and will be apparent from, the following Detailed Description of the Invention and the figures.

### BRIEF DESCRIPTION OF THE DRAWINGS

Fig. 1 is a top plan view of one embodiment of the gaming device of the present invention.

Fig. 2 is a top perspective view of the embodiment illustrated in Fig. 1.

Fig. 3 is a side view of the embodiment of Fig. 1.

Fig. 4 is a bottom view of the embodiment of Fig. 1 with the housing removed.

Fig. 5 is a top view of the game device of Fig. 1 with the housing removed.

Fig. 6 is a front perspective view of another embodiment the present invention.

Fig. 7 is a side view of the embodiment of Fig. 6.

Figs. 8A and 8B are perspective views of one embodiment of the image display associated with the game device of Fig. 6.

Fig. 9 is another embodiment of the image display associated with the gaming device of Fig. 6.

Fig 10 is a flow chart showing game play.

### DETAILED DESCRIPTION

The present invention generally relates to a game device or electronic game device and specifically, to an electronic game device including an interactive deduction game. However, the invention is not limited to an electric game device and can be any suitable device and/or method.

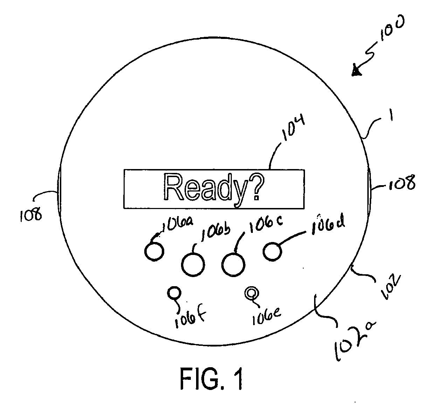

Referring now to Figs. 1 through 6, in one embodiment, the game device 100 provides an interactive deduction game which displays one or more questions to a player in an attempt to determine an object of which the player is thinking. The game device 100 includes a housing 102, and a display device 104 which displays one or more images to a player. The plurality of inputs 106a, 106b, 106c, 106d and 106e are mounted to the housing 102 and enable a player to activate or press one or more of the inputs to interact with the game provided by the game device.

In one embodiment, the housing 102 is manufactured of a durable material such as a rigid plastic. It should be appreciated that the housing 102 may be manufactured with any plastic, rubber or other suitable material or any combination thereof. The housing is preferably formed of two pieces, top portion 102a and bottom portion 102b; however, the housing can be formed by any number of suitable pieces or portions, including one, two, three or more. The portions prefereably attach to an internal structure, such that the top and bottom portions substantially or completely enclose the internal components; however, the housing portions can enclose the internal components in any manner desired. For example the housing portions can in clued any number of portions desired and enclose any portion of the internal components desired. Additionally, the housing portions can couple directly to each other or to any other component or suitable device.

At least a portion of the top portion 102a of housing 102 is preferably transparent or translucent and allows the text or other display generated by the display device 104 to be visible therethrough; however, the display can be visible through an opening in the housing or in any other suitable manner. The display device 104 displays one or more images associated with a game to the player. The display device can be configured to display text, images or any other suitable display and be sized and configured in any suitable manner. Preferably the display device is a light emitting diode (LED) display, but display device 104 can be any suitable display device.

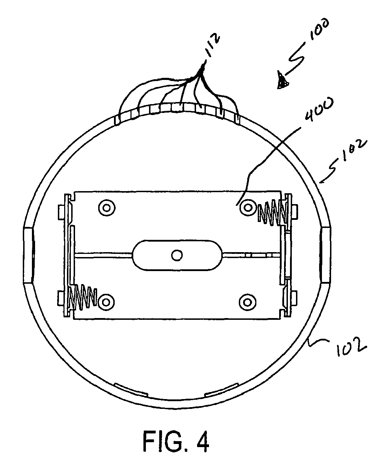

As shown in Fig. 4, the game device preferably includes a battery storage area or compartment 400 for one or more batteries. The battery storage area is preferably accessed by removing the housing bottom portion 102b, but can be accessed in any suitable manner. For example, the batteries can be accessed through a cover or lid which secures the battery or batteries in the housing of the game device. It should be appreciated that any suitable power source such as battery power, electric power may be employed by the game device.

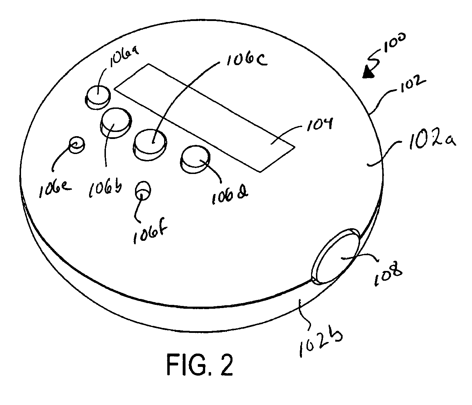

Top portion 102a, preferably includes access to or positioning of inputs 106a, 106b, 106c, 106d, 106e and 106f. Inputs 106a-f may be any suitable input such as button, touch pads, touch screen or any other suitable input, activator or button. As shown in Figs. 1 and 2, the inputs 106a, 106b, 106c, 106d and 106e are buttons which are pressed or pushed by a player or players to interact with a game provided by the game device 100.

The game device 100 includes electrical components 105, which preferably include a processor, circuit board, integrated chip or other suitable electrical components that are in communication with the inputs. It is noted however that the electrical components are not limited to include or exclude any device discussed herein and can include any suitable components to carry out the invention. The electrical components 105 are also in communication with the display device 104 and cause the display device to display one or more images to a player.

The electrical components 105 also cause the display device 104 to display different images to the player based on the input or inputs pressed by the player in a play of the game. Furthermore, the device or electrical components can be configured or adapted to display comments at random or preselected intervals. For example, after input by the user, the electrical components can display a message or comment such as "I know what you are thinking". Such comments add to the enjoyment of the game.

It should be appreciated that the electrical components can include a processor that may be any micro-chip, integrated chip, microprocessor or any other suitable processor. It should be appreciated that the processor may be any suitable circuit board, chip, microprocessor or other processing device.

The electrical components can include a data storage device or memory and have a device (such as a computer usable medium) capable of having computer program code written thereon. The computer program code is configured to cause the electrical components to display a series of questions regarding an object predetermined by a user. For example, the device will display a question selected from a plurality of questions stored in memory. The user then inputs an answer (typically yes, no, unknown, sometimes or any other suitable answer) using buttons 106a-d. The computer readable code is configured to store data entered by the user about the object in response to the series of questions. Preferably the data is stored in memory in the electrical components but can be stored in any suitable manner. The computer readable code is then configured to display text or a word attempting to identify the object based on the displayed series of questions and stored input entered by the user. The text or word is selected from a plurality of words located or stored in memory.

In one embodiment, the game device 100 provides an interactive deduction game to one or more players where the processor attempts to determine an object thought of by a player or predetermined by a player or user by displaying one or more questions on the display device 104 related to the object. In the game, a player or players thinks of an object such as a car but does not disclose, input or otherwise communicate the object to the game device. In this embodiment, a plurality of inputs is associated with specific functions in the game. For example, inputs 106a, 106b, 106c and 106d are associated with designated answers to the questions displayed by the game device. For instance, input 106a may be associated with the answer "unknown," input 106b is associated with the answer "no," input 106c is associated with the answer "yes," and input 106d is associated with the answer "sometimes." In this embodiment, input 106d is also a start button which activates or initiates the game or games provided by the game device. It should be appreciated that the game device may have one or a plurality of inputs for providing various functions for the player.

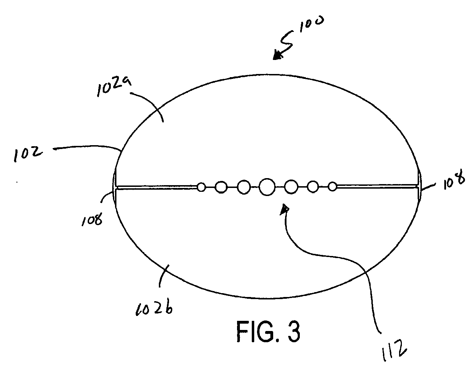

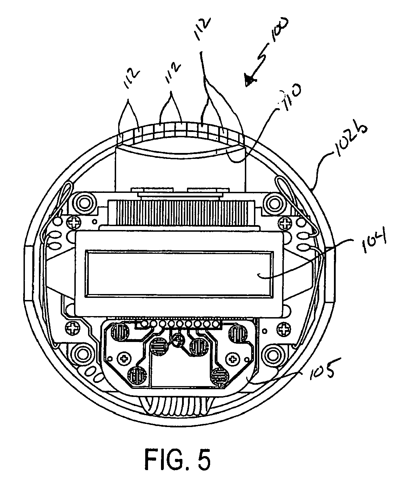

As shown in Figs. 1 and 2, the game device 100 includes an input or button 106f which turns on a sound or sounds associated with the game. The same button may be used to turn off the sound if the sound is not desired. Sound can be projected through speaker 110, as shown in Fig. 5. The sound is preferably allowed to project through the openings 112 in the housing 102, as shown in Fig. 3.

As illustrated in Figs. 1-3, one or more inputs 108 are electrically connected to the electrical components 105 and are provided to increase or decrease the speed at which the questions are displayed by the display device. Preferably the questions are displayed by moving the question from left to right or right to left on the display device as it is being displayed to the player or in any other suitable manner. The rate at which the image or question is displayed to the player can be controlled using the inputs. For example, one input could be pressed one or more times to increase the rate of movement of the image on the display device and the other input can be pressed to slow down or reduce the rate of movement of the displayed image or questions.

In the illustrated embodiment, the game device or processor displays a question to the player after the player has activated or pressed the start button 106e. The question presented or displayed to the player is in the form of a question having answers of yes, no, sometimes or unknown as associated with the inputs in the game. The game device or processor displays one or a plurality of these types of questions to the player to deduce or determine the object which the player is thinking of. For example, the game device may ask the question "Is the object heavier than a feather?" The processor continues to display one or more of these types of questions to the player until the processor deduces or determines the object believed to be the object thought of by the player based on the player's answers to the questions.

The processor's "guess" or resultant object is then displayed to the player by the display device 104. For example, the game device may display the question "Is it a pick-up truck?" If the resultant object or deduced object by the processor is not the object thought of by the player, the player presses input 106b or the answer "no" to indicate to the game device that that is not the object that the player is thinking of. The processor then displays one or more additional questions to try to correctly deduce or determine the object being thought of by the player. The processor then displays another resultant object to the player. If this resultant object or answer is not correct, the player presses the "no" input and the game device or processor provides a winning outcome to the player. If the game device or processor determines the correct resultant object which matches or is the same as the object initially thought of by the player, the player presses or activates the "yes" input. The processor then provides a losing outcome such as displaying the text "You lose!" to the player. It should be appreciated that any suitable images such as text, characters or symbols may be displayed by the display device. It should also be appreciated that any suitable question or questions or any suitable information may be displayed by the game device. It should also be appreciated that any suitable game or games may be provided to one or more players by the game device.

The game device can be adapted to be played by two to four players or teams. In the game, a player or team thinks of an object and the game device or processor asks or displays a series of text questions that are displayed on the game device LED display. Imagery and animation sequences can also be displayed to enhance the game. Players answer the questions by pressing one of the game play buttons 106a-d: e.g., a YES button, a NO button, an Unknown button and a SOMETIMES button. Electronic sounds will be heard though speaker 110 when answer buttons are pressed and during various times of the game to enhance the play. In this embodiment the electrical components or programming of the device restricts or limits the number of questions that the device will display before displaying a resultant object or word. Preferably the number of questions is at least 20 and no more than 25, but that the number of questions can be any number desired. If the resultant object or word is the same as the predetermined object or word (i.e., the object thought of by the player or user), the game displays a "you lose" or losing message. If the predetermined object or word is different from the predetermined object or word, the device displays a "you win" or winning message.

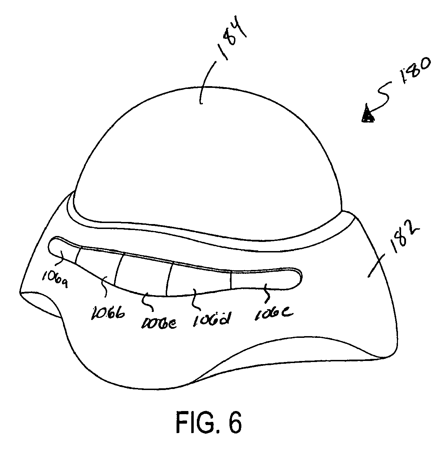

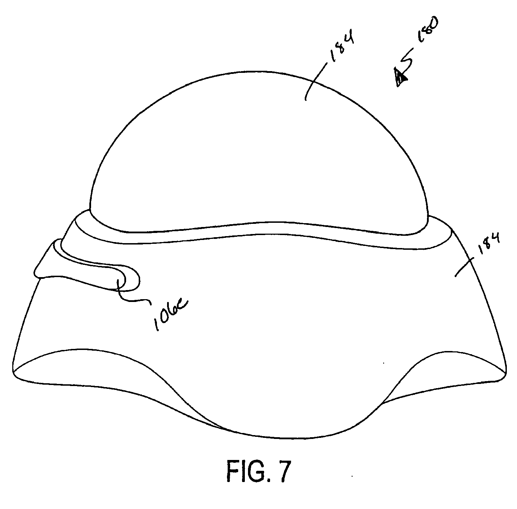

As shown in Figs. 6 and 7, the game device includes a housing 180 positionable on a table top or other similar planar surface. Housing 180 includes a base or lower portion 182 and a display area or upper portion 184. The housing includes a switch or button which enables a user to turn on the power or activate the game. A power-up sound will indicate the activation of the game. An LED assembly (e.g., 200) starts spinning and displays graphic patterns and game logo as described below. A mute button may be pressed to turn off the sound if desired. Players may split up into two teams or play as individuals. Each Team or individual player obtains three YES/NO double-sided betting tokens or chips.

In one embodiment of the game, the game device prompts a Player or Team to think of something then prompts that player or team to press the YES button to begin. The game device or processor displays questions. The game device indicates the next players turn when it has received an answer for that particular question. The players or teams take turns answering the twenty questions. At times prior to the twentieth question, the game device will display a message that it believes it has the correct answer. The players or teams are prompted to place one YES/NO token showing yes or no face up if they believe the game does or does not have the correct answer. Once all have placed a token down, one of the players presses the YES button to continue and the game displays a guess at the object. If the game device or processor guesses correctly, one of the players presses the YES button. All of the players or teams that speculated that the game device or processor would get the answer are awarded one token. If any players or teams speculated incorrectly, they lose their token.

In the game, if the game device or processor guesses incorrectly, the player or team that thought of the object for that round is awarded one token. The game device or processor will ask up to a total of twenty-five questions before a final guess. Players or teams may again speculate if the game device will have the right answer and put up one token. The teams or players that are correct receive an additional token. Players with the wrong answer, guess or speculation lose a token. After a total of twenty-five questions, if the game device or processor still has guessed incorrectly, the player or team that thought of the object for that round is awarded an additional two tokens. A new round starts and the game prompts the next team or player to think of an object. Game play continues until all the players or teams have had a chance to think of an object or until one player or team has lost all their tokens. The team or player with the most tokens at the end of the game wins the game.

It is noted that the description of game device 100, the electrical components thereof and game play described above is applicable to game device 180, unless otherwise specifically described herein.

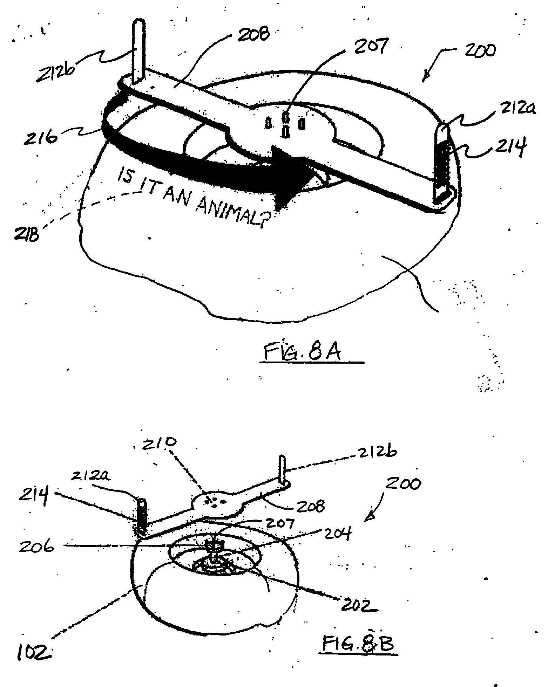

Referring now to Figs. 8A and 8B, one embodiment of an image display or text display 200 is illustrated where the text display displays the images or text through the upper portion 184. In this embodiment, the image display includes an actuator or motor 202 which is connected to the housing and in communication with a suitable power source such as a battery or electrical connection. The motor 202 is connected to the power source using suitable connectors such as suitable wiring. A shaft 204 is rotatably mounted to the motor and is moved or rotated by the motor. A spindle or locking spindle 206 is connected to the shaft 204 and moves or rotates in the same direction at the same rate as the shaft. The spindle 206 includes at least one support 207. A rotatable member 208 defines at least opening or hole 210 which meets with a corresponding support 207 on the spindle 206. The mating of the holes 210 with the supports 207 secure and lock the rotatable member 208 in place. Therefore, the rotatable member 208 rotates in the same direction and rate and at the same rate as the spindle 206 and shaft 204. The motor 202, therefore, can be controlled to move or rotate the rotatable member 208 at any suitable or desired rate or rotation. A first arm 212a and a second arm 212b are connected to opposite ends of the rotatable member 208 and transversely extend from a surface of the rotatable member. The first arm 212a includes at least one and more specifically a plurality of illuminators such as LEDs 214. The second arm 212b acts as a counter weight or counter support to balance the weight of the first arm 212a as the rotatable member 208 rotates in a clockwise or counterclockwise direction.

As illustrated in Fig. 8A, the processor or the game device activates the motor 202 to cause the motor to rotate the rotatable member 208 in a game. The processor also communicates with the illuminators or LEDs 214 on the first arm 212a using suitable wiring or other communication device or devices to cause one or more of the LEDs to illuminate. The illumination of one or more of the LEDs as the rotatable member 208 rotates causes an image such as one of the questions described above to be displayed on the display device 104. For example, in Fig. 8A, the question 218 "Is it an animal?" is displayed by the image display 200 in a play of the game. As shown in Fig. 8A, the rotatable member 208 rotates in a counterclockwise direction as indicated by arrow 216. It should be appreciated that the rotatable member 208 may rotate in a counterclockwise direction, a clockwise direction or in any suitable combination of direction or directions to display one or more images to a player.

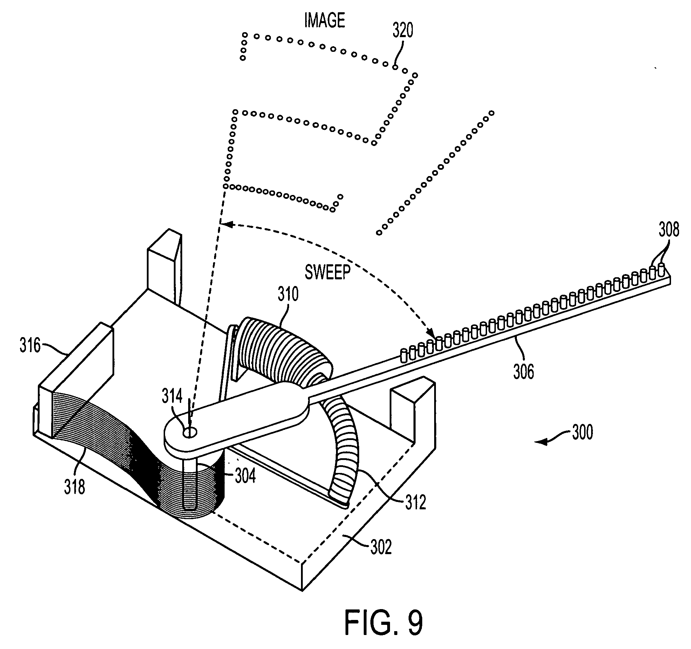

Referring now to Fig. 9, another embodiment of the image display associated with game device 180 is illustrated where the image display 300 displays one or more images to a player. In this embodiment, the image display 300 includes a base 302, a shaft 304 which is rotatably connected to the base and an arm 306 which is attached to the shaft 304 at the pivot or pivot point 314. The movement of the arm 306 is controlled by a circuit board or chip 316. The circuit board or chip 316 communicates with the arm 306 using suitable wiring such as a ribbon connector 318. The ribbon connector 318 is connected to the circuit board 316 and a curved magnet 312. A magnetic coil is positioned about the curved magnet 312. Therefore, the circuit board 316 communicates with the magnetic coil and the magnet to move the arm 306. The arm 306 includes a plurality of illuminators or LEDs 308 which causes the image display 300 to display one or more images to a player as the arm 306 moves back and forth.

In this embodiment, the circuit board or chip 316 causes one or more of the LEDs 308 to light up or illuminate as the arm 306 is moved back and forth to display a designated image or images such as the image of the number twenty-one labeled as reference number 320. Specifically, the image includes one or more illuminated dots generated by the LEDs and forms a line when the dots are next to each other. The dots or LEDs are positioned in a row or line on arm 306 as illustrated in Fig. 9. The arm 306 moves back and forth like a wiper blade and can be electronically turned on for a fraction of a second and repeated at the same position of the arm on the next movement of the arm. This displays an image of an illuminated dot floating in the air. The curved magnet 312 is connected to the arm and moves through the electromagnetic coil 310. Reversing the polarity of the magnetic coil reverses the direction of the magnet and arm. Therefore, the circuit board 316 controls the movement of the arm 306 by controlling the polarity of the magnetic coil. It should be appreciated that any suitable magnetic coil or magnet may be employed by the image display.

In another embodiment, a light source or image display such as an LED display may be positioned and secured to the inside surface of the display device to display one or more images to a player. The LED display may display stationary or moving images to the player.

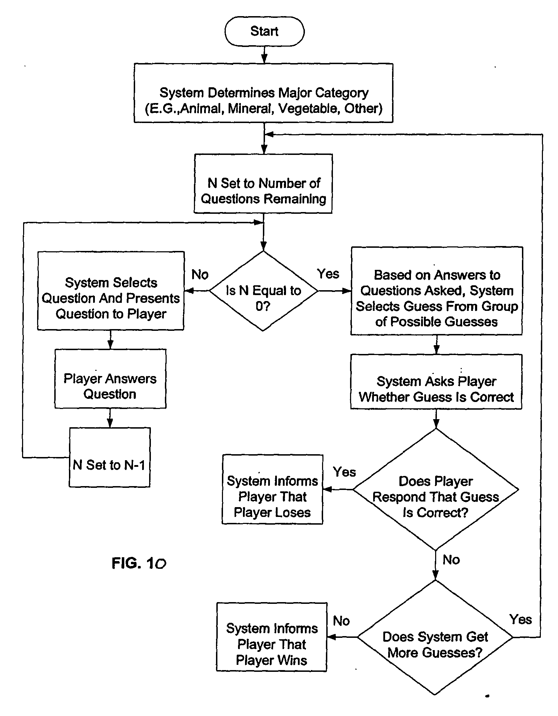

Fig. 10 illustrates an exemplary flow chart to describe the game play process for the herein described embodiments. Preferably using computer programming and the display, each of the embodiments preferably display a questions or series of questions to determine the major category. For example, in one embodiment, the system asks if the game player is thinking of an animal, vegetable, mineral or other, in a series of questions. After the appropriate questions is posed, the game player inputs the appropriate answer, e.g. yes, no, maybe or sometimes. Once the major category is determined, the system sets N to the number of questions remaining. N can be set at any number desired. For example, in a preferred embodiment N is set at 20.

The system determines if N is equal to 0. If it is not, the system selects a question from memory and presents that question to the player via a display. The player answers the question by inputting the appropriate response through the input devices or buttons. The system sets N to equal N-1. This process continues until N equals 0.

When N equals 0, the system selects a "guess" or the resultant object from a memory of a group of objects, based on the questions and answers, and displays the resultant object on the display. The system asks if the resultant object is the same as the undisclosed object thought of by the player. If the player responds that the guess is correct or that the resultant object is the same as the undisclosed object, the system displays a losing message, i.e., the system informs the player that the player loses. If the player responds that the guess is incorrect or that the resultant object is not the same as the undisclosed object, the system determines if it is able to propose additional guesses.

If the system is able to propose additional guesses, the system resets N to a predetermined number (e.g. five), and repeats the steps above.

If the system is not able to propose additional guesses, the system informs the player that the player wins. That is, the system displays a message or text on the display that is a winning message.

It should be understood that various changes and modifications to the presently preferred embodiments described herein will be apparent to those skilled in the art. Such changes and modifications can be made without departing from the spirit and scope of the present invention and without diminishing its intended advantages. It is therefore intended that such changes and modifications be covered by the appended claims.

## Claims

1. A method, comprising the steps of
(a) providing a device with a display, a plurality of inputs, and a processor,
(b) displaying a question on the display, wherein said question is used to determine an undisclosed predetermined object unknown to the processor,
(c) inputting an answer to the question by activating one of the inputs,
(d) repeating (b) and (c) until a resultant object is determined by the processor based on the displayed questions and the answers to the displayed questions inputted by the player, and
(e) displaying the resultant object on the display.

2. A method according to claim 1, further including the step of
providing at least one of the following displays on the display:
a losing display when the resultant object is the same as the undisclosed object, and
a winning display when the resultant object is not the same as the undisclosed object.

3. A method according to claim 1, wherein
the step of displaying a question is limited to displaying at least 20 questions.

4. A method according to claim 1, wherein
the step of displaying a question includes displaying a question that is limited to a yes or no answer.

5. A method according to claim 1, wherein
the step of displaying a question includes displaying a question on a LED screen.

6. A method according to claim 1, further comprising the step of
displaying a comment.

7. A method according to claim 6, wherein
the step of displaying a comment occurs after the step of inputting an answer.

8. A device comprising:
a display device;
a plurality of inputs adjacent the display; and
electrical components operable to:
(a) display a question to a player on the display device, wherein said question is used to determine an undisclosed object,
(b) enable the player to input an answer to the question by activating one of the inputs, and
(c) repeat (a) and (b) until a resultant object is determined based on the displayed questions and the answers to the displayed questions inputted by the player.

9. A device according to claim 8, wherein
said electrical components are adapted to provide a losing outcome to the player when the resultant object is the same as the undisclosed object, or a winning outcome to the player when the resultant object is not the same as the undisclosed object.

10. A device according to claim 8, wherein
said electrical components are adapted to display at least 20 questions.

11. A device according to claim 10, wherein
said electrical components are adapted to display no ore than 25 questions.

12. A device according to claim 8, wherein
said electrical components are adapted to display a question that is limited to a yes or no answer.

13. A device according to claim 8, wherein
said display device is a LED screen.

14. A device according to claim 8, wherein
said electrical components are adapted to display a comment.

15. A device according to claim 14, wherein
said electrical components are adapted to display said comment after the player inputs an answer to the question.

16. A device according to claim 8, wherein
said electrical components include a processor.

17. A computer program product, comprising:
a computer usable medium having computer readable program code embodied therein, said computer program product comprising:
computer readable code configured to cause a computer to display a series of questions regarding an object predetermined by a user;
computer readable code configured to store data entered by the user about said object in response to said series of questions; and
computer readable code configured to display text attempting to identify said object based on said displayed series of questions and stored input entered by the user.

18. A computer program product according to claim 17, wherein
computer readable code configured to cause a computer to display a series of questions is limited to displaying no more than 25 questions.

19. A computer program product according to claim 17, wherein
displayed text is a word selected from a plurality of words stored within memory.

20. A computer program product according to claim 19, wherein
said computer readable code configured to display text is configured to choose said word selected form said plurality of words based on said data entered by the user.
